# EUROPEAN PATENT SPECIFICATION

(11) **EP 3 667 266 B1**
(45) Date of publication and mention of the grant of the patent: **12.03.2025**
(21) Application number: 18211949.5
(22) Date of filing: 12.12.2018
(51) Int. Cl.: G01H 3/10, G08G 5/00, G01H 3/14

(54) **ENVIRONMENT INFORMATION SYSTEM**
UMGEBUNGSINFORMATIONSSYSTEM
SYSTÈME D'INFORMATIONS SUR L'ENVIRONNEMENT

(43) Date of publication of application: 17.06.2020
(73) Proprietor: Airbus Defence and Space GmbH, 82024 Taufkirchen (DE)
(72) Inventor: Semann, Mika, 82024 Taufkirchen (DE)
(74) Representative: Frenkel, Matthias Alexander

(56) References cited:
- WO-A1-2018/178809
- CA-A1- 3 006 131
- US-A1- 2009 140 925
- US-A1- 2011 046 818
- US-B1- 9 442 496
- DELRIEUX CLAUDIO ET AL: "Real-Time Vessel and Oil Spill Detection in the Argentine Ocean Littoral using SAR Satellite Imagery Keywords- SAR IMAGERY -OIL SPILL DETEC- TION -VESSEL DETECTION", INDIAN JOURNAL OF MARINE SCIENCES, 1 September 2016 (2016-09-01), pages 1 - 8, XP055965154, Retrieved from the Internet <URL:https://ri.conicet.gov.ar/bitstream/handle/11336/53651/CONICET_Digital_Nro.fed882de-ccb5-45b2-bd1c-75ac61b0ae1b_A.pdf?sequence=2&isAllowed=y> [retrieved on 20220927]

## Description

Examples relate to concepts for calculating real-time immission values and applications thereof and in particular to a system and method for calculating real-time immission values caused by a mobile emitter at locations within an area of interest.

Systems to monitor immissions e.g. caused by vehicles, for example noise immissions caused by aircrafts in a vicinity of airports, in real time are built on top of one or more sensor stations containing sound level meters, power supply, datalink, data storage and software which processes and visualizes the corresponding data. Drawbacks of such systems are the high costs needed for installation and operating the sensor stations and the fact that immission values can only be provided for the location of the sensor stations. On top of that the sound level meters also measure noise not only caused by the emitter in question like an aircraft but also from other sources, e.g. in situation with strong winds the noise level measured isn't reliable anymore.

WO 2018/178809 A1 discloses a method for computing for at least one receiving point a noise level generated by a sound source, in particular an aeroplane, moving along a defined trajectory with respect to the at least one receiving point, the method comprising the steps of: providing a sound propagation model for an airspace extending between the at least one receiving point and at least one estimated trajectory along which the sound source is expected to be moving with respect to the receiving point; computing the noise level by entering the defined trajectory into the sound propagation model and calculating a sound propagation between the sound source and the at least one receiving point for each one of a number of different sound source locations arranged along the defined trajectory.

US 2011/046818 A1 discloses a method for monitoring airplane noise and emissions may include receiving a predetermined set of engine performance data for an airplane and receiving a predetermined set of airplane flight data for the airplane. The method may also include predicting at least one of a noise level and an emissions level from the airplane at each of a plurality of ground based noise and emissions monitoring stations based on the predetermined set of engine performance data and the predetermined set of airplane flight data. Each of the plurality of ground based noise and emissions monitoring stations is located at a predetermined geographic location along an expected flight path of the airplane. The method may also include presenting at least one of the predicted noise level and the predicted emissions level on a display to a pilot of the airplane to permit operation of the airplane to substantially minimize at least one of an actual noise level and an actual emissions level at each of the plurality of ground based noise and emissions monitoring stations.

US 2009/140925 A1 discloses multilateration techniques to provide accurate aircraft tracking data for aircraft on the ground and in the vicinity of an airport. From this data, aircraft noise and operations management may be enhanced. Aircraft noise may be calculated virtually using track data in real-time and provided to a user to determine noise violations. Tracking data may be used to control noise monitoring stations to gate out ambient noise. Aircraft emissions, both on the ground and in the air may be determined using tracking data. This and other data may be displayed in real time or generated in reports, and/or may be displayed on a website for viewing by airport operators and/or members of the public. The system may be readily installed in a compact package using a plurality of receivers and sensor packages located at shared wireless communication towers near an airport, and a central processing station located in or near the airport.

US 9 442 496 B1 discloses machine learning systems, algorithms and techniques to predict noises being trained using emitted sound pressure levels observed during prior operations of aerial vehicles, as well as environmental conditions, operational characteristics of the aerial vehicles or locations of the aerial vehicles during such prior operations. Anti-noises may be identified and generated based on an overall sound profile of the aerial vehicle, or on individual sounds emitted by the aerial vehicle by discrete sources.

CA 3 006 131 A1 discloses an aircraft control system and method to optimize aircraft control based on noise abatement volumes. A noise abatement component computes optimal flight and engine control based on a line-of-sight distance to minimize direct operating cost (DOC) while complying with community noise regulations.

Systems may have to be optimized with respect to costs. Nevertheless, it is desired to form systems for real time application.

There may be a demand to provide concepts for methods and systems for real-time application with reduced costs.

Such a demand may be satisfied by the subject-matter of the claims.

The invention is defined by the appended claims. According to a first aspect, a method is provided according to claim 1.

In consequence, a sensor infrastructure may not be necessary. Thus, the method may save costs. Further, real-time analysis can be performed on the calculated real-time immission values. The term "emitter" may be understood herein as "emittent", which is a source of a disturbing environmental factor, for example exhaust emittent or noise emittent.

According to a second aspect, a system is provided according to claim 13.

The real-time immission values may be spatially or spatial-temporally distributed immission values for any location in the area of interest. The area of interest may be a vicinity of an airport or any other emitting infrastructure like roads or railroad tracks.

The emission dispersion model may describe a physical model for absorption of emission between the one or more mobile emitters and the locations within the area of interest taking into account at least a qualitative and quantitative description of the emission caused by the emitter (emission model), the dynamic location of the emitter, the environmental parameters influencing the transmission or dispersion of the emission like meterological parameters for air damping and terrain or/and type of ground cover for ground damping. A mesh of all locations in the area of interest may form a real-time emission dispersion map. It is clear to a person skilled in the art to calculate individual noise immission values on the ground e.g. caused by the noise emission of an aircraft in a point to point relationship taking at least some of the above mentioned parameters into account.

It is clear to a person skilled in the art that the statements set forth herein under use of hardware circuits, software means or a combination thereof may be implemented. The software means can be related to programmed microprocessors or a general computer, an ASIC (Application Specific Integrated Circuit) and/or DSPs (Digital Signal Processors). For example, the system, the database and the processing unit may be implemented partially as a computer, a logical circuit, an FPGA (Field Programmable Gate Array), a processor (for example, a microprocessor, microcontroller (µC) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP. It is further clear to the person skilled in the art that even if the herein-described details will be described in terms of a method, these details may also be implemented or realized in a suitable device, a computer processor or a memory connected to a processor, wherein the memory can be provided with one or more programs that perform the method, when executed by the processor. Therefor, methods like swapping and paging can be deployed.

Even if some of the aspects described above have been described in reference to the method, these aspects may also apply to the system. Likewise, the aspects described above in relation to the system may be applicable in a corresponding manner to the method.

It is to be understood that terms such as e.g. "comprising" "including" or "having" etc. mean the presence of the described features, numbers, operations, acts, components, parts, or combinations thereof, and do not exclude the presence or possible addition of one or more further features, numbers, operations, acts, components, parts or their combinations.

Although terms like "first" or "second" etc. may be used to describe different components or features, these components or features are not to be limited to these terms. With the above terms, only one component is to be distinguished from the other. For example, a first component may be referred to as a second component without departing from the scope of the present disclosure; and a second component may also be referred to as a first component. The term "and/or" includes both combinations of the plurality of related features, as well as any feature of that plurality of the described plurality of features.

In the present case, if a component is "connected to", "in communication with" or "accesses" another component, this may mean that it is directly connected to or directly accesses the other component; however, it should be noted that another component may be therebetween. If, on the other hand, a component is "directly connected" to another component or "directly accesses" the other component, it is to be understood that no further components are present therebetween.

In the following, the preferred embodiments of the present disclosure will be described with reference to the accompanying drawings; the same components are always provided with the same reference symbols.
- Figure 1: schematically illustrates a method for calculating real-time immission values at locations within an area of interest; and
- Figure 2: schematically illustrates a system for calculating real-time immission values at locations within an area of interest.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

The system and method will now be described with respect to the embodiments.

The method for calculating real-time immission values at locations within an area of interest comprises providing (S112) an emission dispersion model with real-time information on one or more mobile emitters, for example aircrafts. The one or more mobile emitters are within an area of interest. The method further comprises providing (S114) the emission dispersion model with respective emission characteristics of the one or more vehicles. The method further comprises providing (S116) the emission dispersion model with information comprising influencing environmental factors on emission dispersion for an environment within the area of interest. The method further comprises calculating (S120) real-time immission values at locations within the area of interest based on the emission dispersion model.

The step S110 may comprise the steps S112, S114 and S116 such that the emission dispersion model is based on the provisions in S112, S114 and S116.

The immission is noise immission, such as unwanted sound. The emission dispersion model is a sound propagation model.

The information comprises first data and second data. The first data is dynamic data. The second data is static data. The dynamic data is assumed as changing over time. The static data is assumed as not changing over time. The first and second data may comprise influencing environmental factors on emission dispersion.

The first data may comprise weather data and/or position data of the mobile emitter including information of its operational state and the type/class of the one or more mobile emitters, e.g. a position of a specific type of aircraft being in take off phase at full thrust. The first data may comprise information regarding a respective operational state of the one or more mobile emitters, for example thrust and flap settings or landing gear in or out. Where the first data does not comprise information regarding the respective operational state of the one or more mobile emitters, this respective information can be estimated based on a respective trajectory of the one or more mobile emitters.

The first data and/or (only) the information regarding the respective operational state of the one or more mobile emitters may be transmitted/provided by the respective one or more mobile emitters. In case, the first data or (only) the information regarding the respective operational state of the one or more mobile emitters is not provided, the information regarding the respective operational state of the one or more mobile emitters is calculated from a respective trajectory of the one or more mobile emitters. The respective trajectory, or in case of multiple emitters respective trajectories, may be provided separately, for example by the database. The calculation may be an estimation of the specific parameters influencing emission dispersion.

The first data may be interpolated between two or more data points allowing a higher precision or/and synchronising different data sets to each other e.g. weather data with postiton data of the emitter.

The second data may comprise at least part of the weather data and/or terrain data, and does comprise land cover data.

The second data may be averaged data on a specific time range. The time range may be a day, night, month or year. By using the averaged data, the calculation can be performed faster.

The terrain data may comprise data on an earth surface, influencing absorption, reflectance and/or shadowing of emission waves. The land cover data may comprise 3D building data. The 3D building data may give information on buildings within the area of interest. The 3D building data may also comprise airport data. The 3D building data may include geometrical information of the buildings within the area of interest and for example information on their extent. The airport data may give information on an airport premise within the area of interest.

The position data of the mobile emitter may comprise information on an overall air traffic within the area of interest. Further, the air traffic data may comprise stored information on the one or more mobile emitters, in particular aircrafts. For example, the air traffic data may differ from the real-time information on the one or more vehicles. By using older information, such as recorded or/and pre-analysed air traffic data, together with new information, such as the real-time information on the one or more vehicles, the calculation of the real-time immission values can also made faster.

The weather data can comprise a wind direction, wind speed, air humidity, air temperature and/or air pressure. The weather data may be part of the static or dynamic data. The weather data my form part of the static and/or the dynamic data. Thus, the weather data may be indicated as for example partly static. For example, temperature may be assumed as static for the adaptation of the emission dispersion model. In this example, the wind direction, wind speed, humidity and air pressure may be dynamic. However, any other combination can be assumed for providing the emission dispersion model depending on calculation effort. Less calculation effort can require that all weather data can be assumed as static. The weather data may also include an atmospheric attenuation model. The atmospheric attenuation model may be calculated beforehand the step of calculating the real-time immission values. The atmospheric attenuation model may be used in calculating the real-time immision values. By that, the calculation effort can be minimized as well.

The calculation may be performed by interpolating the specific information of the first and/or second data. The interpolation may be performed before the actual calculation of the real-time immission values.

The land cover data may comprise a type of vegetation, water areas, sealed areas and/or built up areas.

The real-time information may comprise respective trajectory data of the one or more mobile emitters.

Further, the real-time information of the one or more mobile emitters and/or the respective emission characteristics of the one or more mobile emitters may be part of a track data stream. If either one of the information is not part of the track data stream, it can be analyzed under use of the respective flight path of the one or more mobile emitters (in case of flying mobile emitters), which may be included in the aircraft trajectory data. The dynamic changes in operational states of the respective one or more mobile emitters may lead to changes in the speed profile and vertical flight profile of the respective one or more mobile emitters, in particular aircrafts.

The position or trajectory data of the mobile emitter may comprise flight paths of the respective one or more aircrafts. Each flight path may be described in terms of a 3D position. The real-time information may further comprise respective vehicle types of the one or more vehicles. The emission characteristics may vary from vehicle type to vehicle type. The emission characteristics may comprise information on an emission of the hull and/or the engine. The real-time information may further comprise information regarding an operation state of the one or more vehicles, for example thrust and flap settings or landing gear in or out.

The vehicle position data may be different from the vehicle trajectory data. In particular, the vehicle trajectory data may comprise positions of the respective one or more mobile emitters. The positions may be past positions of the respective one or more mobile emitters. Further, the positions may be future positions of the respective one or more mobile emitters. The vehicle position data may comprise a current position of the respective one or more mobile emitters. Further, the static vehicle position data may comprise predicted positions of the respective one or more mobile emitters. The vehicle position data may be information on the one or more vehicles, which are foreseen to be present within the area of interest during the time of calculating the real-time immission values. Thus, the vehicle position data can be retrieved from a database and later on be used for the calculation of the real-time immission values together with the real-time information on the one or more vehicles.

The area of interest may comprise at least an airport and/or a vicinity of the airport.

The emission dispersion model may be provided by tuning parameters influencing an emission caused by the one or more vehicles.

The parameters influencing the emission dispersion may be a vehicle type of the respective one or more vehicles, engine type of the respective one or more vehicles, flight configuration of the respective one or more vehicles along a flight path (weight, speed, flap positions, position of landing gear, etc.), power setting of the respective one or more vehicles, thrust settings of the respective one or more vehicles, meteorological conditions which influence a performance of the respective one or more vehicles, a distance between the respective one or more vehicles, the weather data and a location of interest (within the area of interest), a type of ground (acoustic character of the earth surface) and/or a presence of other reflecting surfaces within the area of interest.

The locations within the area of interest may construct a map or noise immission raster data set. The dispersion map may comprise the calculated immission values at the locations within the area of interest. The locations may form a mesh with calculated immission values.

The emission dispersion model may be based on a neuronal network model. The neuronal network model may have been trained by training data obtained by acoustic sensors and/or by training data comprising information on location and emission of the one or more vehicles.

Machine learning describes mathematical techniques which enable a system/machine to generate knowledge from experience independently.

The method may further comprise visualizing (S140) the calculated real-time immission values at the locations within the area of interest in two or three dimensions as a thematic map.

The step of visualizing may comprise continuously visualizing a video representing the calculated real-time immission values. The dispersion map may be used for this purpose.

The visualization may be in the form of colour coding in the thematic map (continuously changing).

Thus, a geographical extent of immission can be represented to an end user.

The method comprises the step of calculating (S150) sound propagation levels which exceed a certain immission level threshold. A number of citizens affected by immission levels higher than the immission level threshold is estimated based on an overlap of areas having an immission level higher than the certain immission level threshold with areas having citizens. Thereby, the land cover forms the basis of this estimation.

The static data may further comprise a first portion of population data. The first portion of population data may provide information on citizens within the area of interest independent of time. Further, the dynamic data may comprise a second portion of the population data. The second portion of the population data may provide information on citizens within the area of interest dependent on time.

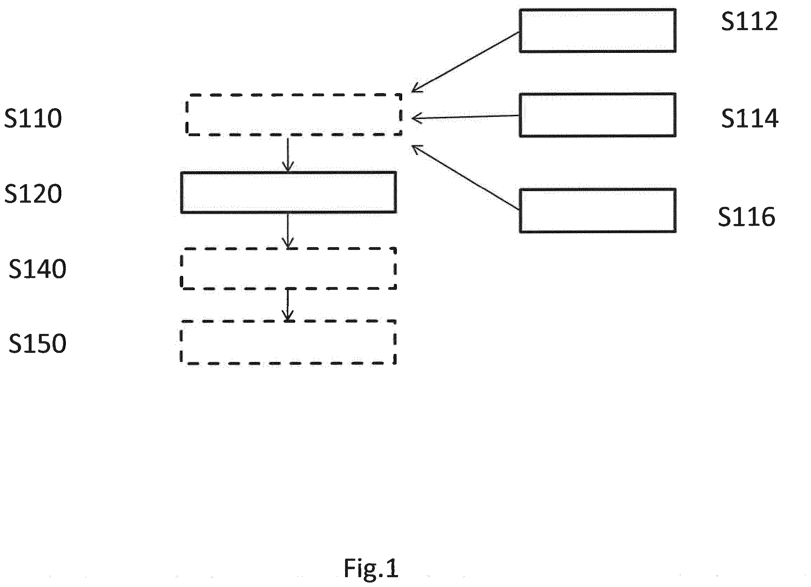

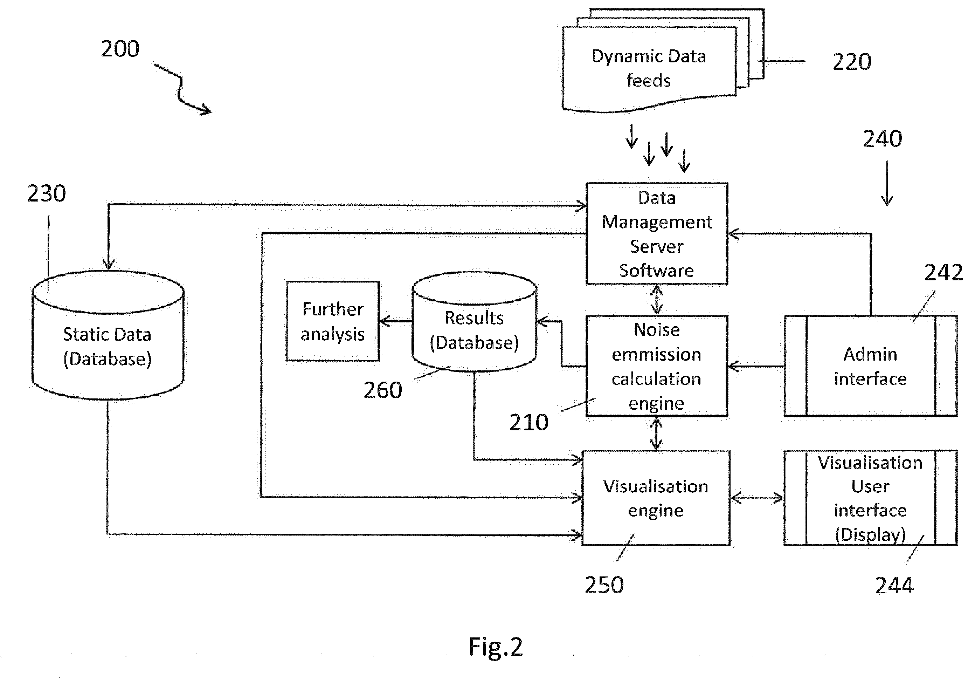

More details and aspects are mentioned in connection with the embodiments described above or below. The embodiment shown in Fig. 1 may comprise one or more optional additional features corresponding to one or more aspects mentioned in connection with the proposed concept or one or more embodiments described below (e.g. Fig. 2).

Figure 2 schematically illustrates a system (200) for calculating real-time immission values at locations within an area of interest. The system (200) comprises a processing unit (210). The processing unit (210) is configured to provide an emission dispersion model based on real-time information on one or more vehicles, for example aircrafts. The one or more vehicles are within an area of interest. The processing unit (210) is further configured to provide the emission dispersion model based on respective emission characteristics of the one or more vehicles. The processing unit (210) is further configured to provide the emission dispersion model based on information retrieved from a database (230). The information comprises influencing environmental factors on emission dispersion for an environment within the area of interest. The processing unit (210) is further configured to calculate real-time immission values at locations within the area of interest based on the emission dispersion model.

The processing unit (210) is illustrated in figure 2 as noise immission calculation engine (210). Further, the real-time information on one or more vehicles may be retrieved from dynamic data feeds (220). Moreover, the respective emission characteristics of the one or more vehicles may also be retrieved from the dynamic data feeds (220).

The dynamic data feeds (220) and the database (230) may be in the form of input parameters or input data. The dynamic data as described with respect to figure 1 may be retrieved from the data feeds (220). The static data as described with respect to figure 1 may be retrieved from the database (230).

The system may further comprise another database (260). The further database (260) may be used as memory. The further database (260) may be used to save results such as the calculated real-time immission values or the emission dispersion map as described with respect to figure 1.

The system may further comprise a user front end (240). The user front end (240) may include an admin interface (242) and a visualisation user interface, for example a display, (244). The user front end (240) may be adapted to illustrate the calculated real-time immission values or the emission dispersion map according to figure 1 to an end user. The admin interface (242) may exchange data with the noise immission calculation engine (210). Further exchange of data may be under use of data management server software with the static database (230). The visualisation user interface (244) may exchange data with a visualisation engine (250). The visualisation engine itself may receive data with the static database (230). Further, the visualisation engine (250) may retrieve corresponding data from the further database (260) and the noise immission calculation engine (210).

Further, the system may comprise machine knowledge. The machine knowledge may be integrated into the data management server software. The machine knowledge may be used by the noise immission calculation engine (210) or be fed to the noise immission calculation engine (210). The machine knowledge may be gathered by a machine learning engine which may be fed by training data. The training data may be part dynamic data and part static data, as described with respect to figure 1. Further to that, the training data may comprise sensor data or recorded immission values of specific locations within the area of interest. Thus, exact values of noise may be present for assessing the ability of the system 200.

More details and aspects are mentioned in connection with the embodiments described above or below. The embodiment shown in Fig. 2 may comprise one or more optional additional features corresponding to one or more aspects mentioned in connection with the proposed concept or one or more embodiments described above (e.g. Fig. 1) or below.

The emission dispersion model may be thought of as a "black box" which operates on input data describing a specific scenario - the airport and its air traffic - to produce an output in the form of values, such as sound levels, at discrete points (usually for a calculation grid) of specified immission metrics. These discrete points may form a mesh and may be illustrated on a map for visualization purposes for an end user.

The input data may be scenario-specific. They may define an airport geometry (i.e. description of runways and ground tracks) and air traffic using the airport (i.e. the number of movements of particular vehicle or vehicle categories on the particular ground tracks at the moment). The processing unit (210) may be a core processor that models physical processes of sound emission and propagation. The database may describe acoustic properties of the vehicle as well as its performance and operational characteristics.

The immission modeling process may be mathematically fitted to a suitable grid array of single point immission values. That array may be generated simply by repeating the single-point calculations for every grid point. For cumulative immission descriptors, each single point calculation may involve an aggregation of single event values for all emission-significant vehicle movements. Therefore, the modeling process may comprise a calculation of the vehicle event level. Traffic may be broken down into vehicle types or categories with different emission and performance characteristics which may be stored in the database (230). To minimize computation, individual vehicle types having very similar emission and performance characteristics can be grouped into representative categories. The modeling process may use between about 10 and 200 categories. However grouping may not be necessary if individual flight path information (e.g. from real-time radar data of the dynamic data feeds (220)) and/or adequate emission data is available.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

## Claims

1. A computer-implemented method for calculating real-time sound propagation values at locations within an area of interest, the method comprising:
providing (S112), to a processing unit from a dynamic data feed, a sound propagation model with real-time information on one or more mobile emitters, for example vehicles, which are within an area of interest,
providing (S114), to the processing unit from the dynamic data feed, the sound propagation model comprised in the processing unit with respective emission characteristics of the one or more mobile emitters, and
providing (S116), to the processing unit from a database, the sound propagation model with information comprising influencing environmental factors on sound propagation for an environment within the area of interest;
calculating (S120), by the processing unit, real-time sound propagation values at locations within the area of interest based on the sound propagation model; and
visualizing (S140), by a user front end, the calculated real-time sound propagation values at the locations within the area of interest in two or three dimensions as a thematic map or sound propagation raster data set, wherein
the information comprises first data and second data, wherein the first data is dynamic data and the second data is static data, wherein the dynamic data is assumed as changing over time, and wherein the static data is assumed as not changing over time, **characterized in that**
the method further comprises the step of calculating (S150), by the processing unit, sound propagation levels which exceed a certain sound propagation level threshold, wherein a number of citizens affected by sound propagation levels higher than the sound propagation level threshold is estimated based on an overlap of areas having a sound propagation level higher than the certain sound propagation level threshold with areas having citizens, and wherein
land cover data comprised in the second data provides information on citizens within the area of interest.

2. The method according to claim 1, wherein the first data comprises weather data, air traffic data and/or vehicle position data for different phases of movement, for example climb phase of respective types/classes of the one or more mobile emitters, and/or population data.

3. The method according to claim 2, wherein the second data comprises at least part of the weather data and/or terrain data.

4. The method according to claim 1 or 2, wherein the first data comprises information regarding a respective operational state of the one or more mobile emitters, for example thrust and flap settings or landing gear in or out, wherein the first data is transmitted by the respective one or more mobile emitters, and/or wherein the information regarding the respective operational state of the one or more mobile emitters is calculated from a respective trajectory of the one or more mobile emitters.

5. The method according to any one of the preceding claims, wherein the real-time information comprises respective vehicle trajectory data of the one or more mobile emitters.

6. The method according to any one of the preceding claims, wherein the area of interest comprises at least an airport and/or a vicinity of the airport.

7. The method according to any one of the preceding claims, wherein, before the step of calculating the real-time sound propagation values, an atmospheric attenuation model is constructed, and wherein the atmospheric attenuation model is used in calculating the real-time sound propagation values.

8. The method according to any one of the preceding claims, wherein the locations within the area of interest construct a dispersion map, wherein the dispersion map comprises the calculated sound propagation values at the locations within the area of interest, and wherein the locations form a mesh with calculated sound propagation values.

9. The method according to any one of the preceding claims, wherein the sound propagation model is based on a neuronal network model which has been trained by training data obtained by acoustic sensors and/or by training data comprising information on emission of the one or more mobile emitters.

10. The method according to any one of the preceding claims, wherein the step of visualizing comprises continuously visualizing a video representing the calculated real-time sound propagation values.

11. A computer program product comprising program code portions for carrying out a method according to any one of the preceding claims when the computer program product is executed on one or more processing units.

12. The computer program product of claim 11 stored on one or more computer readable storage media.

13. A system (200) for calculating real-time sound propagation values at locations within an area of interest, the system comprising:
a processing unit (210) configured to provide a sound propagation model with:
real-time information, retrieved from a dynamic data feed (220), on one or more mobile emitters, for example vehicles, which are within an area of interest,
respective emission characteristics, retrieved from the dynamic data feed (220), of the one or more mobile emitters, and
information, retrieved from a database (230) and/or the dynamic data feed (220), wherein the information comprises influencing environmental factors on sound propagation for an environment within the area of interest;
wherein the processing unit (210) is further configured to calculate real-time sound propagation values at locations within the area of interest based on the sound propagation model;
and wherein the system (200) further comprises a user front end (240) adapted to visualize the calculated real-time sound propagation values at the locations within the area of interest in two or three dimensions as a thematic map or sound propagation raster data set, wherein
the information comprises first data and second data, wherein the first data is dynamic data and the second data is static data, wherein the dynamic data is assumed as changing over time, and wherein the static data is assumed as not changing over time, **characterized in that**
the processing unit (210) is further configured to calculate sound propagation levels which exceed a certain sound propagation level threshold, wherein a number of citizens affected by sound propagation levels higher than the sound propagation level threshold is estimated based on an overlap of areas having a sound propagation level higher than the certain sound propagation level threshold with areas having citizens, and wherein
land cover data comprised in the second data provides information on citizens within the area of interest.

## Patentansprüche

1. Ein computerimplementiertes Verfahren zur Berechnung von Echtzeit-Schallausbreitungswerten an Orten innerhalb eines Interessengebiets, wobei das Verfahren umfasst:
Bereitstellen (S112), für eine Verarbeitungseinheit aus einer dynamischen Datenquelle, eines Schallausbreitungsmodells mit Echtzeit-Informationen über einen oder mehrere mobile Emittenten, zum Beispiel Fahrzeuge, die sich in einem Interessengebiet befinden,
Bereitstellen (S114), für die Verarbeitungseinheit aus der dynamischen Datenquelle, des in der Verarbeitungseinheit enthaltenen Schallausbreitungsmodells mit jeweiligen Emissionseigenschaften des einen oder der mehreren mobilen Emittenten, und
Bereitstellen (S116), für die Verarbeitungseinheit aus einer Datenbank, des Schallausbreitungsmodells mit Informationen, die beeinflussende Umweltfaktoren für die Schallausbreitung in einer Umgebung innerhalb des Interessengebiets umfassen;
Berechnen (S120) von der Verarbeitungseinheit der Echtzeit-Schallausbreitungswerte an Orten innerhalb des Interessengebiets auf Basis des Schallausbreitungsmodells; und
Visualisierung (S140) durch eine Benutzeroberfläche der berechneten Echtzeit-Schallausbreitungswerte an den Orten innerhalb des Interessengebiets in zwei oder drei Dimensionen als thematische Karte oder Schallausbreitungs-Rasterdatensatz, wobei
die Informationen erste Daten und zweite Daten umfassen, wobei die ersten Daten dynamische Daten sind und die zweiten Daten statische Daten sind, wobei angenommen wird, dass sich die dynamischen Daten im Laufe der Zeit ändern, und angenommen wird, dass sich die statischen Daten nicht im Laufe der Zeit ändern, **dadurch gekennzeichnet, dass**
das Verfahren ferner den Schritt umfasst, (S150) durch die Verarbeitungseinheit Schallausbreitungspegel zu berechnen, die eine bestimmte Schallausbreitungspegelschwelle überschreiten, wobei eine Anzahl von Bürgern, die von Schallausbreitungspegeln oberhalb dieser Schallausbreitungspegelschwelle betroffen sind, basierend auf einer Überlappung von Bereichen geschätzt wird, die einen Schallausbreitungspegel oberhalb der bestimmten Schallausbreitungspegelschwelle aufweisen, mit Bereichen, in denen sich Bürger befinden, und wobei
Landbedeckungsdaten, die in den zweiten Daten enthalten sind, Informationen über Bürger innerhalb des Interessengebiets liefern.

2. Das Verfahren nach Anspruch 1, bei dem die ersten Daten Wetterdaten, Luftverkehrsdaten und/oder Fahrzeugpositionsdaten für verschiedene Bewegungsphasen, zum Beispiel Steigflugphase jeweiliger Typen/Klassen des einen oder der mehreren mobilen Emittenten, und/oder Bevölkerungsdaten umfassen.

3. Das Verfahren nach Anspruch 2, bei dem die zweiten Daten zumindest einen Teil der Wetterdaten und/oder Geländedaten umfassen.

4. Das Verfahren nach Anspruch 1 oder 2, bei dem die ersten Daten Informationen über einen jeweiligen Betriebszustand des einen oder der mehreren mobilen Emittenten umfassen, zum Beispiel Schub- und Klappeneinstellungen oder ausgefahrenes bzw. eingefahrenes Fahrwerk, wobei die ersten Daten von dem jeweiligen einen oder den mehreren mobilen Emittenten gesendet werden, und/oder wobei die Informationen über den jeweiligen Betriebszustand des einen oder der mehreren mobilen Emittenten aus einer jeweiligen Flugbahn des einen oder der mehreren mobilen Emittenten berechnet werden.

5. Das Verfahren nach einem der vorhergehenden Ansprüche, bei dem die Echtzeit-Informationen jeweilige Fahrzeugtrajektoriedaten des einen oder der mehreren mobilen Emittenten umfassen.

6. Das Verfahren nach einem der vorhergehenden Ansprüche, bei dem das Interessengebiet zumindest einen Flughafen und/oder eine Umgebung des Flughafens umfasst.

7. Das Verfahren nach einem der vorhergehenden Ansprüche, bei dem vor dem Schritt der Berechnung der Echtzeit-Schallausbreitungswerte ein atmosphärisches Dämpfungsmodell erstellt wird und bei dem das atmosphärische Dämpfungsmodell bei der Berechnung der Echtzeit-Schallausbreitungswerte verwendet wird.

8. Das Verfahren nach einem der vorhergehenden Ansprüche, bei dem die Orte innerhalb des Interessengebiets eine Dispersionskarte bilden, wobei die Dispersionskarte die berechneten Schallausbreitungswerte an den Orten innerhalb des Interessengebiets umfasst und wobei die Orte ein Netz mit berechneten Schallausbreitungswerten bilden.

9. Das Verfahren nach einem der vorhergehenden Ansprüche, bei dem das Schallausbreitungsmodell auf einem neuronalen Netzwerkmodell basiert, das mittels Trainingsdaten trainiert wurde, die von akustischen Sensoren gewonnen wurden und/oder Trainingsdaten umfassen, die Informationen über Emissionen des einen oder der mehreren mobilen Emittenten enthalten.

10. Das Verfahren nach einem der vorhergehenden Ansprüche, bei dem der Schritt der Visualisierung ein kontinuierliches Visualisieren eines Videos umfasst, das die berechneten Echtzeit-Schallausbreitungswerte darstellt.

11. Ein Computerprogrammprodukt, das Programmcodeabschnitte zum Ausführen eines Verfahrens nach einem der vorhergehenden Ansprüche enthält, wenn das Computerprogrammprodukt auf einer oder mehreren Verarbeitungseinheiten ausgeführt wird.

12. Das Computerprogrammprodukt nach Anspruch 11, gespeichert auf einem oder mehreren computerlesbaren Speichermedien.

13. Ein System (200) zur Berechnung von Echtzeit-Schallausbreitungswerten an Orten innerhalb eines Interessengebiets, wobei das System Folgendes umfasst:
eine Verarbeitungseinheit (210), die dafür ausgelegt ist, ein Schallausbreitungsmodell zu bereitzustellen mit:
Echtzeit-Informationen, abgerufen aus einer dynamischen Datenquelle (220), über einen oder mehrere mobile Emittenten, zum Beispiel Fahrzeuge, die sich in einem Interessengebiet befinden,
jeweiligen Emissionseigenschaften, abgerufen aus der dynamischen Datenquelle (220), des einen oder der mehreren mobilen Emittenten, und
Informationen, abgerufen aus einer Datenbank (230) und/oder der dynamischen Datenquelle (220), wobei die Informationen beeinflussende Umweltfaktoren für die Schallausbreitung in einer Umgebung innerhalb des Interessengebiets umfassen;
wobei die Verarbeitungseinheit (210) ferner dafür ausgelegt ist, Echtzeit-Schallausbreitungswerte an Orten innerhalb des Interessengebiets basierend auf dem Schallausbreitungsmodell zu berechnen;
und wobei das System (200) ferner eine Benutzeroberfläche (240) umfasst, die dafür ausgelegt ist, die berechneten Echtzeit-Schallausbreitungswerte an den Orten innerhalb des Interessengebiets in zwei oder drei Dimensionen als thematische Karte oder Schallausbreitungs-Rasterdatensatz zu visualisieren, wobei
die Informationen erste Daten und zweite Daten umfassen, wobei die ersten Daten dynamische Daten sind und die zweiten Daten statische Daten sind, wobei angenommen wird, dass sich die dynamischen Daten im Laufe der Zeit ändern, und angenommen wird, dass sich die statischen Daten nicht im Laufe der Zeit ändern, **dadurch gekennzeichnet, dass**
die Verarbeitungseinheit (210) ferner dazu ausgelegt ist, Schallausbreitungspegel zu berechnen, die eine bestimmte
Schallausbreitungspegelschwelle überschreiten, wobei eine Anzahl von Bürgern, die von Schallausbreitungspegeln höher als die Schallausbreitungspegelschwelle betroffen sind, basierend auf einer Überlappung von Bereichen geschätzt wird, die einen Schallausbreitungspegel höher als die bestimmte
Schallausbreitungspegelschwelle aufweisen, mit Bereichen, in denen sich Bürger befinden, und wobei
Landbedeckungsdaten, die in den zweiten Daten enthalten sind, Informationen über Bürger innerhalb des Interessengebiets liefern.

## Revendications

1. Procédé mis en œuvre par ordinateur pour calculer des valeurs de propagation du son en temps réel à des endroits situés dans une zone d'intérêt, le procédé comprenant:
la fourniture (S112), à une unité de traitement, à partir d'un flux de données dynamiques, d'un modèle de propagation du son contenant des informations en temps réel sur un ou plusieurs émetteurs mobiles, par exemple des véhicules, qui se trouvent dans une zone d'intérêt,
la fourniture (S114), à l'unité de traitement, à partir du flux de données dynamiques, du modèle de propagation du son compris dans l'unité de traitement avec les caractéristiques d'émission respectives d'un ou de plusieurs émetteurs mobiles, et
la fourniture (S116), à l'unité de traitement, à partir d'une base de données, du modèle de propagation du son avec des informations comprenant des facteurs environnementaux influençant la propagation du son pour un environnement dans la zone d'intérêt;
le calcul (S120), par l'unité de traitement, des valeurs de propagation du son en temps réel à des endroits de la zone d'intérêt sur la base du modèle de propagation du son; et
la visualisation (S140), par un logiciel frontal d'utilisateur, des valeurs calculées de propagation du son en temps réel aux emplacements de la zone d'intérêt en deux ou trois dimensions sous la forme d'une carte thématique ou d'un ensemble de données raster de propagation du son, dans lequel
les informations comprennent des premières données et des secondes données, les premières données étant des données dynamiques et les secondes étant des données statiques, les données dynamiques étant supposées évoluer dans le temps et les données statiques étant supposées ne pas évoluer dans le temps, **caractérisé en ce que**
le procédé comprend en outre l'étape consistant à calculer (S150), par l'unité de traitement, les niveaux de propagation du son qui dépassent un certain seuil de niveau de propagation du son, dans lequel un certain nombre de citoyens concernés par des niveaux de propagation du son supérieurs au seuil de niveau de propagation du son est estimé sur la base d'un chevauchement de zones ayant un niveau de propagation du son supérieur au certain seuil de niveau de propagation du son avec des zones où se trouvent des citoyens, et dans lequel
les données de couverture terrestre contenues dans les secondes données fournissent des informations sur les citoyens de la zone d'intérêt.

2. Procédé selon la revendication 1, dans lequel les premières données comprennent des données météorologiques, des données sur le trafic aérien et/ou des données sur la position des véhicules pour différentes phases du mouvement, par exemple la phase de montée des différents types/classes du ou des émetteurs mobiles, et/ou des données sur la population.

3. Procédé selon la revendication 2, dans lequel les secondes données comprennent au moins une partie des données météorologiques et/ou des données de terrain.

4. Procédé selon la revendication 1 ou 2, dans lequel les premières données comprennent des informations relatives à un état opérationnel respectif du ou des émetteurs mobiles, par exemple les réglages de la poussée et des volets ou la sortie ou l'entrée du train d'atterrissage, les premières données étant transmises par un ou plusieurs émetteurs mobiles, et/ou les informations relatives à l'état opérationnel respectif du ou des émetteurs mobiles étant calculées à partir d'une trajectoire respective du ou des émetteurs mobiles.

5. Procédé selon l'une quelconque des revendications précédentes, dans lequel les informations en temps réel comprennent les données relatives à la trajectoire des véhicules respectifs du ou des émetteurs mobiles.

6. Procédé selon l'une quelconque des revendications précédentes, dans lequel la zone d'intérêt comprend au moins un aéroport et/ou le voisinage de l'aéroport.

7. Procédé selon l'une quelconque des revendications précédentes, dans lequel avant l'étape de calcul des valeurs de propagation du son en temps réel, un modèle d'atténuation atmosphérique est construit, et le modèle d'atténuation atmosphérique est utilisé pour calculer les valeurs de propagation du son en temps réel.

8. Procédé selon l'une quelconque des revendications précédentes, dans lequel les emplacements dans la zone d'intérêt construisent une carte de dispersion, la carte de dispersion comprenant les valeurs de propagation du son calculées aux emplacements dans la zone d'intérêt, et les emplacements forment un maillage avec les valeurs calculées de propagation du son.

9. Procédé selon l'une quelconque des revendications précédentes, dans lequel le modèle de propagation du son est basé sur un modèle de réseau neuronal qui a été entraîné par des données d'entraînement obtenues par des capteurs acoustiques et/ou par des données d'entraînement comprenant des informations sur l'émission du ou des émetteurs mobiles.

10. Procédé selon l'une quelconque des revendications précédentes, dans lequel l'étape de visualisation comprend la visualisation en continu d'une vidéo représentant les valeurs calculées de propagation du son en temps réel.

11. Produit programme informatique comprenant des parties de code de programme destinées à exécuter un procédé selon l'une quelconque des revendications précédentes lorsque le produit programme informatique est exécuté sur une ou plusieurs unités de traitement.

12. Produit programme informatique selon la revendication 11 stocké dans un ou plusieurs supports d'enregistrement lisibles par ordinateur.

13. Système (200) permettant de calculer en temps réel des valeurs de propagation de son à des endroits situés dans une zone d'intérêt, le système comprenant:
une unité de traitement (210) configurée pour fournir à un modèle de propagation du son:
des informations en temps réel, extraites d'un flux de données dynamiques (220), sur un ou plusieurs émetteurs mobiles, par exemple des véhicules, qui se trouvent dans une zone d'intérêt,
des caractéristiques d'émission respectives, extraites du flux de données dynamiques (220), du ou des émetteurs mobiles, et
des informations, extraites d'une base de données (230) et/ou du flux de données dynamiques (220), dans lequel les informations comprennent des facteurs environnementaux influençant la propagation du son dans un environnement situé dans la zone d'intérêt;
dans lequel l'unité de traitement (210) est en outre configurée pour calculer les valeurs de propagation du son en temps réel à des endroits de la zone d'intérêt sur la base du modèle de propagation du son;
et dans lequel le système (200) comprend en outre un logiciel frontal d'utilisateur (240) adapté à la visualisation des valeurs calculées de propagation du son en temps réel aux emplacements de la zone d'intérêt en deux ou trois dimensions sous la forme d'une carte thématique ou d'un ensemble de données raster de propagation du son, dans lequel
les informations comprennent des premières données et des secondes données, les premières données étant des données dynamiques et les secondes étant des données statiques, les données dynamiques étant supposées évoluer dans le temps et les données statiques étant supposées ne pas évoluer dans le temps, **caractérisé en ce que**
l'unité de traitement (210) est en outre configurée pour calculer les niveaux de propagation du son qui dépassent un certain seuil de niveau de propagation du son, dans lequel un certain nombre de citoyens concernés par des niveaux de propagation du son supérieurs au seuil de niveau de propagation du son est estimé sur la base d'un chevauchement de zones ayant un niveau de propagation du son supérieur au certain seuil de niveau de propagation du son avec des zones où se trouvent des citoyens, et dans lequel
les données de couverture terrestre contenues dans les secondes données fournissent des informations sur les citoyens de la zone d'intérêt.
